# EUROPEAN PATENT SPECIFICATION

(11) **EP 0 480 565 B1**
(45) Date of publication and mention of the grant of the patent: **31.08.1994**
(21) Application number: 91306767.4
(22) Date of filing: 24.07.1991
(51) Int. Cl.: H01M 2/18

(54) **Separators for electrochemical cells**
Separatoren für elektronische Zellen
Séparateurs pour des cellules électrochimiques

(30) Priority: 09.10.1990 US 594525
(43) Date of publication of application: 15.04.1992
(73) Proprietor: EVEREADY BATTERY COMPANY, INC., St. Louis Missouri 63164 (US)
(72) Inventor: Winger, Jerrold, Elyria, Ohio 44035 (US)
(74) Representative: Lord, Hilton David

(56) References cited:
- CH-A- 593 564
- GB-A- 1 304 402
- US-A- 4 669 183

## Description

The present invention relates to electrochemical cells wherein the electrodes are so arranged that one is located within the other, a separator arrangement being located between the electrodes to inhibit electrical shorting.

This type of arrangement is primarily suited for use with alkaline type cells. Standard alkaline cells are conventionally manufactured with a cathode which generally predominantly comprises an oxide depolariser, such as manganese dioxide, usually admixed with a binder and a conductive material, such as graphite. The cathode is generally pressed firmly against the inside wall of a cell container, with the inner portion of the cathode left hollow, so that the cathode assumes a cylindrical structure with a centrally defined cavity, closed at one end.

Separator material, usually formed into thin sheets of paper-like material, is inserted into the cathode's central cavity in such a manner that it conforms to the cavity of the cathode. An anode, which usually comprises a consumable anodic material, such as powdered zinc, admixed with a gelling agent, such as polyacrylic acid or carboxymethyl cellulose, and a suitable alkaline electrolyte, such as an aqueous potassium hydroxide solution, is then extruded into the cavity of the separator.

Thus, the sheets of separator material electrically isolate the anode from the cathode while simultaneously permitting ions to flow between the electrodes.

Generally, the separator strips will be forced downward and through the cathode's central cavity, so that the separator's centre region is parallel with, and close to, the bottom of the container. Occasionally insertion of the separator, using a rod driving means, is such that the centre region of the separator is driven into the cathode material at the bottom of the container. On such occasions, small pieces of the cathode may be driven into, and partially through, the separator, potentially resulting in a short circuit of the anode and cathode, rendering the cell useless.

In addition, during discharge of the cell, zinc dendrites may be formed which extend through the separator at the bottom region of the container, thereby short circuiting the cell.

Both of these problems are difficult to detect, as detection is only possible by disassembly of the cell, so as to inspect the bottom central portion of the separator for evidence of cathode mix penetration or dendrite penetration.

GB-A-2,181,584 describes a method of producing a separator basket for standard alkaline batteries. This process uses a mandrel to form and support a tube of separator material on which the separator material is folded over one end of the tube and then a small amount of sealant is dispensed on the outside surface of the folded over bottom of the separator to form a basket. The sealant seals the end of the separator basket and, in some applications, may secure the separator to other cell components, such as the cathode. As a final step, a mandrel-supported separator may be inserted into a can containing a moulded cathode.

CA-A-993,934 illustrates that carbon-zinc cells are commonly manufactured by inserting a carbon rod into a zinc can containing a cathode mix. This manufacturing process is known to suffer from mix penetration through the separator beneath the carbon rod. To overcome this, there are disclosed bottom cups having a mix-impermeable substance applied to the central region of the cup's inner surface. Coating of only the central portion of the bottom cup effectively prevents mix penetration directly beneath the carbon rod while maximising both the cup's surface area available for soak up of the electrolyte and anode : cathode surface area.

US-A-3,748,181 discloses attaching a plastic strip to the top edge of a separator which is formed into a convoluted wound separator basket for cylindrical batteries. The film eliminates internal short circuits caused by mix-smearing near the open end of the can during the mix insertion process.

US-A-4,220,693 discloses a separator for alkaline cells in which one of the embodiments has polypropylene secured to the entire surface of the base separator film.

US-A-3,097,975 seeks to overcome internal short circuits caused when one electrode 'grows' through the separator's interstices. A pulverulent material, such as aluminium oxide or magnesium oxide, is used to reduce the size of the interstices.

A solution to this problem has been described in a co-pending European Patent Application to the instant Applicant. Essentially, there is provided a separator comprising crossed over separator strips, and having an electrically insulating barrier located where the strips cross over, thereby preventing penetration of the separator by the cathode mix, or through-growth of zinc dendrites.

However, there remains a problem associated with using strips of separator material to form a separator basket as described. Specifically, undesirable folds tend to form in the separator strips near the bottom segment of the basket. These projected folds or protrusions are essentially unavoidable, as the cross-over area of the strips will necessarily be square. The resulting basket will then have a square bottom to be forced into a round cavity in the outer electrode. Folds develop to accommodate the excess material.

The folds, also referred to as ears, may be formed internally or externally of the separator basket, and can give rise to at least two problems. One problem is that, in alkaline cells, if the anode mix flows into the gaps or folds of the protrusions, the zinc in the anode may work its way between the strips and eventually cause an electrical short within the cell. The second problem pertains to folds in the separator that protrude into the retaining cavity, thereby preventing the anode from falling to the bottom of the retaining cavity. This can force the trailing end of the anode to project above the top of the cathode, thereby creating a situation in which the anode can easily be smeared onto the cathode during the remainder of the cell assembly process. In addition, if excess protrusion material can be prevented, or removed, especially in an economical and controllable fashion, then more active material could be placed into the cell for greater output capacity.

It has now been discovered that it is possible to overcome the above problems by providing suitable cut-outs in the separator strips in the vicinity of the cross-over of the strips, so that the basket can adopt a conformation more suited to the shape of the bore in the outer electrode.

Simply, the present invention provides an electrochemical cell, wherein the electrodes are so arranged that one is located within a cavity in the other, a separator basket formed from crossed over strips of separator material extending into the cavity and about the inner electrode, folds being prevented in the basket at the bottom of the cavity by providing suitable cut-outs in the separator strips in the vicinity of the cross-over of the strips, so that the basket can adopt a conformation more suited to the shape of the cavity.

Thus, in a first aspect the present invention provides an electrochemical cell, wherein the electrodes are so arranged that one is located within a cavity in the other, comprising a separator basket which, in situ, is ionically permeable and electrically insulating, and which extends into the cavity about the inner electrode to inhibit electrical shorting between the electrodes; the basket comprising at least one separator strip, preferably a plurality of separator strips, the central portion of each strip being located at the extreme of the basket within the cavity and wherein, where there is a plurality, the central portions of the strips are superimposed on one another; the radial portion of each strip extending along the inner walls of the cavity to prevent physical contact between the electrodes, characterised in that cut-outs are provided in each strip in the vicinity of the juncture of radial and central portions to facilitate conformity of the basket with the cavity.

By the term "basket" is meant an arrangement of separator strips having a base and side walls, suitable to hold the inner electrode in physical separation from the outer electrode.

By the term "juncture" is meant that region of the strip where the radial and central portions meet. A typical strip will have two such junctures.

The strips are formed with cut-outs to facilitate conformation of the basket with the cavity. In general, this will entail the bottom of the basket being forced into contact with the bottom of the cavity, or bore, in the outer electrode.

The cut-outs may take any suitable format, and may vary from strip to strip. The only requirement is to facilitate conformation of the basket with the bore. In order to achieve this, the cut-out (also referred to herein as "cut") is ideally placed so as to at least partially cover the juncture between radial and central sections of the strip. This allows the bottom part of the radial portion to conform with the bottom part of the side wall of the bore, and allows the central portion of the strip to conform with bottom of the cavity.

Precisely how the bottom part of the radial portion of the strip and the central portion conform with the bore will be dependent on the relative proportions of the strips and the bore, and on the cut-out.

In one configuration, the cut-out may be a simple slit at the juncture of radial and central portions, so that the bottom edge of the radial portion can follow the edge of the bottom of the bore, in an ideal situation. The edge of the central portion will then fold up along the side wall of the bore, but not taking the bottom of the radial portion with it, thereby avoiding the formation of undesirable folds.

The cut-out may actually remove material, and one such possibility includes a cut as described above, together with an arcuate portion with its focus generally central to the central portion. Ideally, the arc shape would correspond to the general proportions of the bottom of the bore. Such a cut-out would then permit the edges of both the radial and central portions to follow the edge of the bottom of the bore. It will also be appreciated that such a cut-out can facilitate the use of strips wider than the bore of the outer electrode, and two cut-outs on one side of the strip may merge into one. Such an arrangement would also permit a basket made from one strip, the sides of the strip meeting to complete the basket.

Such an arrangement could provide an exit point for the material of the inner electrode. This may be prevented by any suitable means. One such includes the provision of a suitable cap at the bottom of the basket. The cap may comprise any suitable material, and need not be ionically conductive, although it may be of a separator material, such as is used for the basket. Provided the cap covers any potential leakage points resulting from the cuts, then this is sufficient. Further suitable variations on caps are described below.

A second suitable method for preventing leakage is to ensure that the cuts only extend far enough into the wall of the strip to be of use, but not so far as not to coincide with at least one other strip of the basket. In such a manner, all cuts will be prevented from leaking by an uncut wall of another strip.

However, it is not essential that the cuts be protected, such as by a cap or another strip, as the basket will usually fit tightly in the bore, so that the bottom edge of the radial portion will be forced into contact with the outer edge of the central portion, thereby preventing leakage. However, it will be appreciated that some form of protection, suitably as described, will generally be required if the cut-out also encompasses some of the bottom part of the radial portion of the strip, so that the bottom edge of the radial portion, where cut, does not reach the bottom of the cavity.

It will also be appreciated that the type of material used for the basket will have some play, so that it is not necessary for a cut to extend nearly to the centre of the strip. In addition, less flexibility to conform with the bore is required at the centre of the wall, as the tangent of the bore at that point is effectively flatter than farther around.

If many strips are provided, all of a relatively narrow width, then less of a cut-out is needed, but this conformation is not preferred, as the introduction of more strips allows for greater error to be introduced into the manufacture of the cells. It is preferred that the strips have a width substantially that of the diameter of the bore, with the preference generally being for a slightly narrower strip, rather than a slightly larger strip.

The cut-outs may be formed after the strips have been formed or, generally more conveniently, in a sheet of material from which the strips are subsequently cut. The cut-outs could then take the form of slits, circles or suitable polygons, for example, which are then cut through to form the strips.

In general, it will be appreciated that, while precise positioning of the cuts is desirable, it is not essential. If the cut is part way up the radial portion, then a certain amount of undesirable folding can still be avoided, for example.

The cells of the invention are suitably alkaline cells, generally with a cathode arranged in contact with the inner walls of the container. Such a cathode may conveniently be formed by placing a suitable preparation, such as a granulate, in the container and forcing in a ram. This serves the purpose of compacting the cathode material and, at the same time, ensures a snug fit with the walls of the container as well as leaving a suitable bore for the anode.

Thus, it will be appreciated that the cathode will generally take the form of a closed tube within the container, and having a central bore. While it is preferred that the cells of the invention have such a configuration, it is not essential. For example, the bore need not be central and, indeed, need not even be single. A multitude of bores may be provided for a high-power cell, but such an arrangement may prove awkward to manufacture. Where there is a multitude of bores, the separator basket of the invention may be provided in one or more of them, preferably all.

The bore in the external electrode, which is preferably the cathode, but which may be the anode, provided that suitable material is used, will generally be regular, especially where it is formed by a ram. However, there is no absolute requirement for regularity, as the separator material will generally be sufficiently flexible that, when the second electrode material, generally the anode, is forced in, it will take up the shape of the bore.

The outer electrode need not necessarily be formed in situ, and may be pre-formed. Thus, it will be appreciated that the bore may be open-ended, such that the bottom of the container forms the end of the bore in situ.

The separator basket is ideally in snug contact with both electrodes, as air bubbles, for example, can be seriously deleterious to performance of the cell. Such a snug fit will generally be ensured by ramming the arrangement into the bore in the outer electrode, followed by forcing the inner electrode material in.

It will be appreciated that the most common configuration of the separator baskets of the invention is where the arrangement forms an open-ended tube within the bore of the outer electrode, typically the cathode. However, it is possible that, for example, the inner electrode material could be placed in a tube defined by the separator strips, whereon the strips could then be sealed over the inner electrode, thereby totally enclosing the inner electrode. In such an arrangement, the current collector could be inserted through the strips.

For the separator strips, any suitable material may be used, provided that, in situ, the separator basket is ionically permeable but electrically insulating. Suitable materials include woven or non-woven paper of cellulose fibres laminated to a similar mat of vinyl fibres, kraft paper, α-cellulose paper, methyl cellulose film, polyvinyl alcohol, copolymers of polyvinyl acetate and polyvinyl chloride, rayon, nylon, and mixtures thereof.

Any number of strips may be used, although two or three, especially two, are preferred. The strips will generally be arranged such that the middle portions overlap so that, before use, the effect is a regular cross or star. It will be appreciated that irregular shapes can also be used, but that there may be disadvantages if any arms of material do not extend sufficiently along the walls of the bore of the outer electrode. It is also not preferred that the arms extend out of the container, as this will generally necessitate their removal before assembly can proceed. Such removal is not necessarily difficult, but wastes time and requires extra tooling.

A regular shape is also preferred to ensure that the inner electrode is completely contained. An irregular cross or star may concentrate material on one side of the bore, while leaving little or no insulation on another.

Thus, it is preferred that the arms of the cross or star are both radially regularly spaced and of regular length, although irregular lengths are envisaged. Hence, the term "central portion" is used herein to distinguish over the ends, or radial portions, of the strips, and does not necessarily mean the mathematical centre of any strip.

The extreme of the separator basket is that portion extending farthest into the bore of the outer electrode toward the base of the container. An electrically insulating barrier may be positioned at this point to prevent dendrites extending through the separator and to prevent the mix permeating the material.

The barrier may be any suitable material that serves the purpose. It is not required that it be ionically permeable and, given that it is desirable that the barrier be durable and resilient, it is generally not practical for the barrier to be ionically permeable.

Suitable barrier materials generally include plastics, waxes, glues and other substances which are not electrically conductive. Preferred materials include polypropylene, polyethylene, polyvinyl chloride, asphalt, wax, polyvinylidene chloride, cellophane and nylon, particularly polypropylene and polyethylene.

Where a barrier is used, it may be positioned in any suitable manner. For example, it may be positioned at the bottom of the bore in the outer electrode prior to insertion of the separator basket. However, more generally, it will be inserted with the separator. When it is inserted with the separator basket, it may be positioned in any suitable place. Examples include situations where it is adhered to a surface of one of the strips, particularly between strips. Alternatively, the barrier may comprise an adhesive strip of plastic tape.

It will be appreciated that there may be more than one barrier. This may either be an artefact of production, or because it is desired, for example because it strengthens the barrier. The strips may all be cut laterally from a length of material with a strip of barrier material down its centre. This will effectively provide a series of strips with a central barrier element. If no other barrierless strips are provided, then the number of barrier elements in the separator basket will correspond to the number of strips.

In such a case as the foregoing, the barrier elements may usefully be self-adhesive. The strips may then be placed face-to-face, so that a suitable, stable, star or cross is formed. This may prove advantageous in production.

It will be appreciated that both the barrier, if used, and the separator basket should cover the area defined by the bottom of the bore in the outer electrode. Either of the two, or both, may be larger, but this may require extra force, or inconvenience, in positioning the arrangement. If the area covered is smaller, then the risk is increased of dendrites or mix permeating the basket.

It will be appreciated that the barrier may serve the dual purpose of barrier and cap.

In an alternative aspect, the present invention provides a process for assembling an electrochemical cell characterised in that, after providing a cell container having a first electrode assembled therein containing a bore, a strip of separator material is forced therein, such that a central portion thereof is brought into contact with the bottom of the bore and such that the radial elements line the sides of the bore, optionally followed by forcing a second separator strip into the bore as defined for the first strip, the second strip being rotated from the first, preferably by 90°, especially where no further strips are used, and optionally inserting further strips, at least until the walls of the bore are covered to prevent electrical, but not ionic contact, between the electrodes in use, an electrically insulating barrier being provided, if desired, at the bottom of the bore, preferably between strips, cut-outs being provided in each strip in the vicinity of the juncture of radial and central portions to facilitate conformation of the basket with the cavity, and then assembling the remainder of the cell in a known manner.

The above method may be modified in any manner, especially so as to produce cells of the invention as defined herein.

In an alternative aspect, the present invention provides an electrochemical cell, such as an alkaline cell, employing a tubular separator closed at one end which is composed of at least two separator strips each having a bottom segment and extending sidewalls with the bottom segment of one strip superimposed on the bottom segment of the other strip and wherein notches are formed in the edges of the strip adjacent the bottom segment to substantially eliminate the usual projected folds in the edges of the strip that are formed when the strips are assembled into a substantially circular container having an open end. There is also provided a process for assembling the separator in the cell.

In a preferred embodiment, the present invention provides an electrochemical cell assembled in a housing comprising a container having a closed end and an open end closed by a cover; a first active electrode material positioned within and contacting the inner wall of the container and defining a centrally disposed cavity; a separator comprising at least two separator strips with each strip having a bottom segment with extending walls and each wall being defined by two edges; the bottom segment of one strip superimposed on the bottom segment of the other strip with the extending walls of each strip arranged to face the edges of the walls of the other strip so that the walls define a cavity in the separator and wherein each edge of at least one strip has a notch formed in the area of the edge adjacent the bottom segment of the strip to substantially eliminate the usual projected folds in the edge of the strip formed at the area; the separator positioned within and contacting the first active electrode material; a second active electrode material positioned within the cavity of the separator; a first terminal on the housing electrically connected to the first active electrode material; and a second terminal on the housing electrically insulated from the first terminal and electrically connected to the second active electrode material. The area of the bottom segment should preferably be approximately the area of the cross-section of the cavity of the first electrode.

A further preferred embodiment of the invention is an electrochemical cell assembled in a housing comprising a cylindrical container having a closed end and an open end closed by a cover; a first active electrode material positioned within and contacting the inner wall of the container and defining a centrally disposed cavity; a separator comprising at least two elongated separator strips defined by two spaced apart elongated edges with each edge having two spaced apart notches in which the area formed in each strip by the length of the edge between the spaced apart notches and the width between the spaced apart edges define a bottom segment and in which the length of the edge extending from each notch and the width between the spaced apart edges defines a wall; the bottom segment of one strip abutting on the bottom segment of the other strip and the walls of each strip extended substantially perpendicular to the bottom segment with the edges of each wall of a strip superimposed on the edge of a wall of the other strip thereby forming a substantially circular cavity in the separator, the notches provide space so that the usual projected folds in the edges of the strips formed at said area of the separator adjacent the bottom segment when the strips are folded into a substantially circular cavity will be substantially eliminated; said separator positioned within and contacting said first active electrode material; a second active electrode material positioned within said cavity of the separator; a first terminal on the housing electrically connected to said first active electrode material; and a second terminal on the housing electrically insulated from the first terminal and electrically connected to said second active electrode material.

The notches are preferably semi-circular, triangular or polygonal shaped notches.

Preferably, a cup is disposed adjacent to the bottom of at least one separator.

It is preferred that an electrically insulating barrier layer is positioned on a surface of at least one of the bottom segments of the separator to prevent internal shorting between the electrodes.

It is further preferred that the first active electrode material is the cathode and the second active electrode material is the anode, especially wherein the cathode comprises manganese dioxide and the anode comprises zinc.

The electrically insulating barrier layer is preferably polypropylene, polyethylene, polyvinyl chloride, asphalt, wax, polyvinylidene chloride, cellophane or nylon.

In a further aspect, the present invention provides a process for assembling an electrochemical cell comprising the steps:
(a) positioning a first active electrode material inside a container closed at the bottom and open at the top so that the first active electrode material defines a centrally disposed cavity, the container being adapted as the terminal for the first active electrode material;
(b) preparing a first strip and a second strip of separator material with each strip having a bottom segment with extending walls with each wall being defined by two edges and forming in each edge of at least one strip a notch at the area adjacent the bottom segment of the strip and wherein the area of the bottom segment is approximately the cross-sectional area of the cavity in the first electrode;
(c) forcing the first strip of separator material and the second strip of separator material into the cavity of the first active electrode material and with the separator conforming to the contour of the cavity of the first electrode material; the first strip being positioned with respect to the second strip so as to form within the first electrode a separator basket with a bottom surface which has effectively no projected folds at the area adjacent the notches at the bottom of the separator basket;
(d) adding a second active electrode material into the cavity of the separator material; and
(e) sealing the open end of the container with a cover and wherein at least a portion of the cover is electrically insulated from the container and electrically contacting the second active electrode material thereby the portion being adapted as the terminal for the second active electrode material.

It will be appreciated that the cell formed by the above process will preferably have any one or more of the characteristics defined above for the cells of the invention.

In an alternative, preferred embodiment the present invention provides a process for assembling a cell using the separator of this invention which comprises the steps of:
(a) positioning the first active electrode material, such as a cathode, inside a container closed at the bottom and open at the top so that the first active electrode material defines a centrally disposed cavity, the container being adapted as the terminal for the first active electrode material;
(b) preparing a first strip and a second strip of separator material with two spaced apart notches in each of the edges of the strips; the notches in each edge being spaced apart sufficiently so that the distance between the notches is not substantially greater than the maximum diameter of the cavity in the first active electrode material;
(c) forcing the first strip of separator material and the second strip of separator material into the cavity of the first active electrode material and forcing the strips to assume the contour of the cavity of the first electrode material; the first strip being positioned with respect to the second strip to form within the first electrode a separator basket which has effectively no projected folds at the area adjacent to the bottom of the separator basket;
(d) adding a second active electrode material into the cavity of the separator material; and
(e) sealing the open end of the container with a cover and wherein at least a portion of the cover is electrically insulated from the container and electrically contacting the second active electrode material thereby the portion being adapted as the terminal for the second active electrode material.

As discussed above, any shape notch is suitable, so long as it provides a means for substantially eliminating the folds normally protruding from the area adjacent the bottom of the separator basket.

A standard alkaline cell can be produced by preparing a quantity of powdered cathode material and disposing it into the open end of a cylindrical container. A moulding ram is then pressed into the powdered mixture that is contained within the container and, since the ram's outside diameter is substantially smaller than the inside diameter of the can, an elongated "ring" of cathode mix is moulded tightly against the container's interior circumference. After the ram is withdrawn, a tubular shaped cavity is formed into the central portion of the cathode. Two strips of a separator material with suitably disposed notches are inserted into the cathode's centrally located cavity in order to form a separator basket. An electrolyte and a gel-like anode are dispensed into the separator basket and then a seal assembly is inserted into the open end of the container. This assembly includes an elongated current collector that projects into the anode and also includes a plastic disc-shaped seal that fits tightly within the container's opening and is seated slightly below the top of the container. The top of the container is redrawn until the seal is radially compressed and then the lip of the container is crimped inwardly.

A preferred separator insertion process for standard alkaline cells utilises two strip-shaped pieces of separator material with appropriate notches. The first step in the separator insertion process involves cutting a first strip of separator to an appropriate length and width with suitable notches. The length should preferably be equal to at least twice the cathode's height plus the inside diameter of the cathode. The width of the strip should be slightly greater than one half the cathode's inside circumference.

Next, the first strip is positioned over the open end of a container that contains a moulded cathode. The strip's broad surfaces should be perpendicular to the cathode's longest dimension and the centre point of the separator should align with the cathode's longitudinal axis. A rod-shaped separator insertion ram is positioned above the open end of the container. The rod's outside diameter should be slightly smaller than the inside diameter of the cathode's cavity and the circumference of the ram should be concentric with the circumference of the cathode's cavity. As the ram descends, it carries the middle portion of the separator downward into the cathode's central cavity until the separator touches the inside bottom of the cathode. The two walls of the separator strip that extend beyond the separator's central region extend upward from the bottom of the cathode and line the cathode's sidewalls.

The surface of the first strip that contacts the cathode is referred to as the outside surface of the first strip while the opposite side of the separator is referred to as the inside surface of the first strip. A second strip of separator is cut to the correct length and width. The central portion of the second strip is positioned over the open end of the cathode that already contains the first separator strip. When the second strip is positioned above the container, it is rotated so that after the second strip is inserted into the container, the seams of the second strip are turned 90° relative to the seams in the inserted first separator strip. This rotational offset seam arrangement inhibits particles of zinc in the anode mix that may otherwise work their way through the seams of both separators and thereby create an internal short circuit.

After the second strip has been properly located, another rod-shaped insertion ram is positioned above the cathode and concentrically aligned with the inside diameter of the cathode's cavity. The second separator insertion ram descends and inserts the second separator strip inside the previously inserted first separator strip. The walls of the second separator extend upward from the bottom of the cathode and line the inside surface of the first separator. The surface of the second separator that contacts the inner surface of the first separator is referred to as the outside surface of the second separator. The other surface of the second separator faces the longitudinal axis of the cathode's cavity and is referred to as the inside surface of the second separator.

An efficient and reliable separator insertion process is generally critical to the production of standard alkaline batteries on a continuous basis. The separator should be consistently inserted to the bottom of the cathode's cavity at the high speeds required by mass production processes and this should be done without abusing the separator.

The present invention prevents, or inhibits, folds in the formed separator basket from protruding inside and/or outside the walls of the cavity formed by the separator, thereby allowing the anode mix to be easily inserted into the separator basket and descend down to the bottom surface, and prevent any mix from flowing into the folds, as the folds are effectively eliminated.

Preferably the first strip should be positioned about 90° with respect to the second strip and the notches in the first strip superimposed over the notches in the second strip to form the separator basket.

The cells of the present invention overcome the problems associated with the formation of folds in the separator basket. One way to achieve this is to cut out small portions of the strips, as described, prior to inserting them into the cathode. Suitable modifications include cutting out small pieces of the separators or imparting slits to the strips at those locations where the folds of the separator create the ears. Preferably, each separator strip should be notched at least once on each of its longest sides. These notches can be made in a variety of shapes and sizes such as a slit, a semi-circular notch, a triangular notch, or any polygonal shaped notch. The primary criteria to be met are: (1) substantially eliminate any ears within the retaining cavity after the separator basket has been formed; and (2) there are no direct openings in the separator basket through which the anode can migrate.

If desired, a cup-shaped piece of material, such as paper, can be inserted into the bottom of the separator basket after the separators have been inserted into the cathode. This cup will serve as a backup means to ensure that anode mix does not work its way through any gaps that might inadvertently be formed between the edges of the separator sheets.

An electrically insulating barrier layer may be positioned on the surface of at least one of the bottom surfaces of the separator basket to prevent internal shorting between the electrodes. Suitable electrically insulating barrier layer materials include: polypropylene, polyethylene, polyvinyl chloride, asphalt, wax, polyvinylidene chloride, cellophane and nylon. The electrically insulating barrier layer may also comprise a film or strip having an adhesive on one of its surfaces, so that it may be secured to a selected area (bottom segment) of a separator strip.

If the electrically insulating barrier material is a two sided type adhesive tape, then it may be disposed between the bottom segments of the separator strips, thereby keeping them secured during the assembly process. If the electrically insulating barrier material is plastic, then it may be attached to the bottom surface of a separator strip, using heat to laminate the plastic to the separator, or the plastic may be extruded directly onto the separator. In all embodiments, the electrically insulating barrier material may provide effective protection against piercing of the bottom segment of the separator by small bits of active electrode material to prevent the development of an internal electrical short circuit.

Preferably, the first active electrode material is the cathode material, usually comprising a depolariser, such as manganese dioxide, usually mixed with a binder and conductive material, such as graphite, acetylene black or mixtures thereof. Preferably, the second active electrode material is the anode, usually comprising zinc admixed with a gelling agent, and a suitable alkaline electrolyte, such as aqueous potassium hydroxide solution. Anode materials and their preparation are described in US-A-2,930,064, US-A-2,935,547 and US-A-2,993,947.

The separator of this invention may be composed of any suitable separator material, such as woven or non-woven paper of cellulose fibres laminated to a similar mat of vinyl fibres, kraft paper, alpha cellulose paper, methyl cellulose film, polyvinyl alcohol, copolymers of polyvinyl acetate and polyvinyl chloride, rayon, nylon, or mixtures thereof.

Thus, the cells of the present invention comprise a separator basket having no effective protrusions or folds, so that a more uniform cavity is formed, allowing the use of more inner electrode material and generally overcoming the problems of the art. Furthermore, the separator baskets of the present invention are easy to make and cost effective to produce.

The present invention will now be further illustrated with reference to the accompanying drawings, in which:
Figure 1 is a perspective view of two separator strips of the invention, showing the first strip superimposed over and folded upward on a second strip positioned 90° to the first strip, the central areas overlapping;
Figure 2 is a perspective view of the separator strips when the non-overlapping segments have been folded normal to the plane of the overlapping area of the strips and curved inward to form a closed end cylindrical configuration;
Figure 3 is a cross-sectional view of Figure 2 taken through line 3-3;
Figure 4 is a sectional view of the separator of Figure 2 positioned within the cavity of a cylindrically constructed cathode;
Figure 5 is a top view of a sheet of separator material having a series of spaced apart circular notches formed at the middle area of the sheet;
Figure 6 is a top view of a sheet of separator material having a series of spaced apart square notches formed at the middle area of the sheet; and
Figure 7 is a top view of a sheet of separator material having a series of spaced apart polygonal notches formed at the middle area of the sheet.

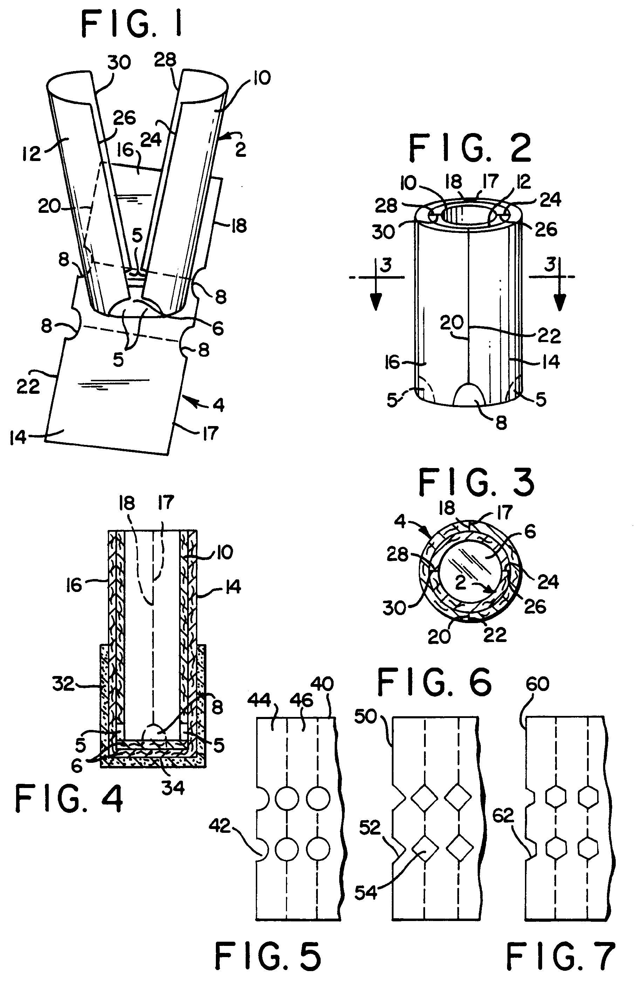

Figure 1 shows a first strip of separator material 2 having walls 10 and 12 positioned under and rotated 90° on a second strip of separator material 4 having walls 14 and 16 so that overlapping occurs only in area 6. Strip 2 has two spaced apart semi-circular notches 5 formed in each edge 24-26 and 28-30, and strip 4 has two spaced apart notches 8 formed in each edge 17-18 and 20-22.

The axis of the notches of strip 2 is initially placed normal to the axis of the notches of strip 4. Figure 1 shows strip 2 partially folded upward so that edges 24 and 28 approach edges 26 and 30, respectively. As shown in Figure 2, when projecting the separator strips into a circular cavity of, for example, a cathode-lined container, walls 10 and 12 of strip 2 are bent normal to area 6 forming a circular configuration with walls 14 and 16 of strip 4. The notches 5 and 8 formed in the sheets 2 and 4 respectively, will effectively eliminate the undesirable folds or protrusions normally formed at the area adjacent the bottom surface 6 at the mating edges of the walls.

The forming of notches 5 and 8 in strips 2 and 4, respectively, will provide for a more uniform cylindrically-shaped separator basket, and eliminate any protrusion of the strip materials in the cavity formed in the basket which may prevent the anode from falling to the bottom of the basket. By folding walls 10 and 12 of strip 2 and walls 14 and 16 of strip 4, a cylindrical configuration can be produced as shown in Figures 2 and 3. This cylindrical configuration conforms more uniformly to the interior of, for example, the cathode pressed firmly against the inside wall of a cell's container.

As evident from Figures 2 and 3, wall 14 faces edges 24 of wall 10 and 26 of wall 12; wall 16 faces edges 28 of wall 10 and 30 of wall 12; wall 12 faces edge 20 of wall 16 and 22 of wall 14; and wall 10 faces edge 18 of wall 16 and 17 of wall 14. Thus the separator strips 2 and 4 are folded during insertion into a cylindrical cavity of the cathode and conform to the shape of the cylindrical cavity. As shown in Figure 4, the overlapping or bottom area 6 is positioned at the bottom of the cylindrical cavity of the electrode 32 in contact with the bottom inner surface 34 thereof.

Although the edges of the walls (24-26; 28-30; 17-18; and 20-22) of the separator strips are shown abutting to provide a circular cylindrical configuration, it will be appreciated that, in practice, the edges will usually overlap to form an irregular cylindrical configuration, but which is substantially free of folds protruding at the area adjacent the bottom of the basket.

In some applications, the edges may be separated and still provide an overall irregular configuration that can be used in some cell applications. The only requirement is that the separator strips provide a cylindrical type basket having an overall upstanding wall that is completely closed so that the cathode is not in direct contact with the anode in any area of the separator.

Figure 5 shows a sheet of separator material 40 having a series of spaced apart semi-circular notches 42 formed at its midsection. Sheet 40 may be cut into strips 44, 46, and so on, as shown by the broken lines, to provide strips that may be used as one or both of the strips shown in Figure 1.

Figure 6 shows a similar sheet of separator material 50, except that the notches are spaced apart triangular shaped notches 52 formed from diamond shaped cutouts 54.

Figure 7 shows a similar sheet of separator material 60, except that the notches are spaced-apart polygonal shaped notches 62.

## Claims

1. An electrochemical cell, wherein the electrodes are so arranged that one is located within a cavity in the other, comprising a separator basket which, in situ, is ionically permeable and electrically insulating, and which extends into the cavity about the inner electrode to inhibit electrical shorting between the electrodes; the basket comprising at least one separator strip, preferably a plurality of separator strips, the central portion of each strip being located at the extreme of the basket within the cavity and wherein, where there is a plurality, the central portions of the strips are superimposed on one another; the radial portion of each strip extending along the inner walls of the cavity to prevent physical contact between the electrodes, characterised in that cut-outs are provided in each strip in the vicinity of the juncture of radial and central portions to facilitate conformity of the basket with the cavity.

2. A cell according to claim 1, wherein the basket has two strips, preferably with a width similar to the diameter of the cavity.

3. A cell according to claim 2, wherein the strips are arranged substantially at 90° to each other.

4. A cell according to any preceding claim, wherein the strips are forced into contact with the bottom of the cavity, or bore, in the outer electrode.

5. A cell according to any preceding claim, wherein the cut-outs are placed so as to at least partially cover the juncture between radial and central sections of the strip.

6. A cell according to any preceding claim, wherein the cut-out is a simple slit at the juncture of radial and central portions.

7. A cell according to any preceding claim, wherein the cut-out comprises a slit at the juncture of radial and central portions, together with an arcuate portion having a focus generally central to the central portion, preferably wherein the arc shape corresponds to the general proportions of the bottom of the cavity in the outer electrode.

8. A cell according to any preceding claim, comprising means to further prevent leakge of the material of the inner electrode, preferably comprising either: a suitable cap at the bottom of the basket; or by ensuring that all portions of each cut-out coincide with at least one other strip of the basket.

9. A cell according to any preceding claim, wherein there is further provided, at the extreme of the basket, an electrically insulating barrier, preferably of plastic, such as an adhesive strip of plastic tape, especially of polypropylene, polyethylene, polyvinyl chloride, asphalt, wax, polyvinylidene chloride, cellophane or nylon, particularly polypropylene or polyethylene.

10. A cell according to claim 9, wherein the barrier is disposed between two strips where the strips are superimposed.

11. A cell according to any preceding claim, wherein the outer electrode is the cathode and the inner electrode is the anode, the cathode preferably comprising manganese dioxide and the anode preferably comprising zinc.

12. A cell according to any preceding claim, wherein the separator strips are woven or non-woven paper of cellulose fibres laminated to a similar mat of vinyl fibres, kraft paper, α-cellulose paper, methyl cellulose film, polyvinyl alcohol, a copolymer of polyvinyl acetate and polyvinyl chloride, rayon, nylon, or a mixture of any of these.

13. An electrochemical cell assembled in a housing comprising a container having a closed end and an open end closed by a cover; a first active electrode material positioned within and contacting the inner wall of the container and defining a centrally disposed cavity; a separator comprising at least two separator strips with each strip having a bottom segment with extending walls and each wall being defined by two edges; the bottom segment of one strip superimposed on the bottom segment of the other strip with the extending walls of each strip arranged to face the edges of the walls of the other strip so that the walls define a cavity in said separator and wherein each edge of at least one strip has a notch formed in it at the area of the edge adjacent the bottom segment of the strip to substantially eliminate the usual projected folds in the edge of the strip formed at said area; said separator positioned within and contacting said first active electrode material; a second active electrode material positioned within said cavity of the separator; a first terminal on the housing electrically connected to said first active electrode material; and a second terminal on the housing electrically insulated from the first terminal and electrically connected to said second active electrode material,
said cell optionally further comprising any one or more suitable features as defined in any preceding claim, in any suitable combination.

14. A process for assembling an electrochemical cell characterised in that, after providing a cell container having a first electrode assembled therein containing a bore, a strip of separator material is forced therein, such that a central portion thereof is brought into contact with the bottom of the bore and such that the radial elements line the sides of the bore, optionally followed by forcing a second separator strip into the bore as defined for the first strip, the second strip being rotated from the first, preferably by 90°, especially where no further strips are used, and optionally inserting further strips, at least until the walls of the bore are covered to prevent electrical, but not ionic contact, between the electrodes in use, an electrically insulating barrier being provided, if desired, at the bottom of the bore, preferably between strips, cut-outs being provided in each strip in the vicinity of the juncture of radial and central portions to facilitate conformation of the basket with the cavity, and then assembling the remainder of the cell in a known manner,
said process optionally being modified such that the resulting cell comprises any one or more suitable features as defined in any preceding claim, in any suitable combination.

## Patentansprüche

1. Galvanische Zelle, bei der die Elektroden so angeordnet sind, daß sich die eine innerhalb eines Hohlraums in der anderen befindet, welche einen Separatorkorb aufweist, der an Ort und Stelle ionisch permeabel und elektrisch isolierend ist und der in den Hohlraum um die innere Elektrode hineinreicht, um ein elektrisches Kurzschließen zwischen den Elektroden zu verhindern; wobei der Korb wenigstens einen Separatorstreifen, vorzugsweise eine Vielzahl von Separatorstreifen aufweist, wobei sich der Mittelteil jedes Streifens am äußeren Ende des Korbes innerhalb des Hohlraums befindet, und wobei sich, wenn es sich um eine Vielzahl von Streifen handelt, die Mittelteile der Streifen überlagern; wobei der radial verlaufende Teil jedes Streifens längs der Innenwände des Hohlraums verläuft, um den physischen Kontakt zwischen den Elektroden zu verhindern, gekennzeichnet dadurch, daß in jedem Streifen in der Nähe der Verbindungsstelle zwischen den radial verlaufenden und den mittleren Teilen Ausschnitte vorhanden sind, um die Anpassung des Korbes innerhalb des Hohlraums zu erleichtern.

2. Zelle nach Anspruch 1, bei welcher der Korb zwei Streifen hat, deren Breite vorzugsweise gleich dem Durchmesser des Hohlraums ist.

3. Zelle nach Anspruch 2, bei welcher die Streifen im wesentlichen im Winkel von 90° zueinander angeordnet sind.

4. Zelle nach einem der vorhergehenden Ansprüche, bei welcher die Streifen mit dem Boden des Hohlraumes oder der Bohrung in der äußeren Elektrode in Kontakt gepreßt werden.

5. Zelle nach einem der vorhergehenden Ansprüche, bei welcher die Ausschnitte so angeordnet sind, daß sie zumindest teilweise die Verbindungsstelle zwischen den radial verlaufenden und den mittleren Teilen des Streifen bedecken.

6. Zelle nach einem der vorhergehenden Ansprüche, bei welcher der Ausschnitt ein einfacher Schlitz an der Verbindungsstelle von radial verlaufendem und mittleren Teil ist.

7. Zelle nach einem der vorhergehenden Ansprüche, bei welcher der Ausschnitt einen Schlitz an der Verbindungsstelle des radial verlaufenden und des mittleren Teils sowie einen gekrümmten Abschnitt aufweist, bei dem der Mittelpunkt im allgemeinen zentral zum mittleren Teil liegt und wobei die Bogenform vorzugsweise den allgemeinen Proportionen des Bodens des Hohlraums in der äußeren Elektrode entspricht.

8. Zelle nach einem der vorhergehenden Ansprüche, welche außerdem Mittel aufweist, um den Austritt von Material aus der inneren Elektrode zu verhindern, vorzugsweise entweder durch die Bereitstellung einer geeigneten Kappe am Boden des Korbes oder durch die Sicherstellung, daß alle Teile jedes Ausschnitts zumindest mit einem anderen Streifen des Korbes zusammenfallen.

9. Zelle nach einem der vorhergehenden Ansprüche, bei welcher außerdem am äußeren Ende des Korbes eine elektrisch isolierende Sperre, vorzugsweise aus Plaste, wie ein Klebestreifen aus Plasteband, insbesondere aus Polypropylen, Polyethylen, Polyvinylchlorid, Asphalt, Wachs, Polyvinylidenchlorid, Cellophan oder Nylon, vor allem Polypropylen oder Polyethylen, vorgesehen ist.

10. Zelle nach Anspruch 9, bei welcher die Sperre an der Stelle zwischen zwei Streifen angeordnet ist, wo sich die Streifen überlagern.

11. Zelle nach einem der vorhergehenden Ansprüche, bei welcher die äußere Elektrode die Katode und die innere Elektrode die Anode ist, wobei die Katode vorzugsweise Mangandioxid aufweist und die Anode vorzugsweise Zink aufweist.

12. Zelle nach einem der vorhergehenden Ansprüche, bei welcher die Separatorstreifen aus verwebtem oder nichtverwebten Papier aus Cellulosefasern sind, die auf eine ähnliche Matte aus Vinylfasern, Kraftpapier, α-Cellulosepapier, Methylcellulosefilm, Polyvinylalkohol, einem Copolymer aus Polyvinylacetat und Polyvinylchlorid, Rayon, Nylon oder einem Gemisch jeder dieser Substanzen laminiert werden.

13. Galvanische Zelle, die in einem Gehäuse montiert ist, welche folgende Elemente aufweist: einen Behälter mit einem geschlossenen Ende und einem offenen, durch einen Deckel geschlossenen Ende; ein erstes aktives Elektrodenmaterial, das darin angeordnet ist und die Innenwand des Behälters berührt und einen in der Mitte angeordneten Hohlraum bildet; einen Separator, der wenigstens zwei Separatorstreifen aufweist, wobei jeder Streifen ein Bodensegment mit weiterführenden Wänden hat und jede Wand durch zwei Kanten definiert ist; wobei das Bodensegment des einen Streifens das Bodensegment des anderen Streifens überlagert und die weiterführenden Wände jedes der Streifen so angeordnet sind, daß sie an die Kanten der Wände des anderen Streifens angrenzen, so daß die Wände einen Hohlraum in dem Separator bilden, und wobei jede Kante von wenigstens einem Streifen eine Kerbe hat, die in der Fläche der Kante gebildet wird, die an das Bodensegment des Streifens angrenzt, um im wesentlichen die üblichen vorstehenden Falten in der Kante des Streifens, die in diesem Abschnitt gebildet werden, zu vermeiden; wobei der Separator in dem ersten aktiven Elektrodenmaterial angeordnet und mit diesem in Kontakt ist; ein zweites aktives Elektrodenmaterial, das innerhalb des Hohlraums des Separators angeordnet ist; eine erste Klemme an dem Gehäuse, die elektrisch mit dem ersten aktiven Elektrodenmaterial verbunden ist, und eine zweite Klemme an dem Gehäuse, die elektrisch gegenüber der ersten Klemme isoliert und elektrisch mit dem zweiten aktiven Elektrodenmaterial verbunden ist,
wobei die Zelle wahlweise außerdem jedes einzelne oder mehrere geeignete Merkmale nach der Definition in einem der vorhergehenden Ansprüche in jeder geeigneten Kombination aufweist.

14. Verfahren zur Montage einer galvanischen Zelle, gekennzeichnet dadurch, daß nach der Bereitstellung eines Zellenbehälters, der eine erste darin montierte Elektrode, die eine Bohrung aufweist, hat, ein Streifen aus Separatormaterial in diese gepreßt wird, so daß dessen Mittelteil mit dem Boden der Bohrung in Kontakt gebracht wird und so daß die radial verlaufenden Elemente die Seiten der Bohrung auskleiden, wahlweise gefolgt vom Hineinpressen eines zweiten Separatorstreifens in die Bohrung, wie das für den ersten Streifen definiert wurde, wobei der zweite Streifen gegenüber dem ersten Streifen versetzt wird, vorzugsweise um 90°, vor allem dann, wenn keine weiteren Streifen eingesetzt werden, und wahlweise gefolgt vom Einsetzen weiterer Streifen, zumindest bis die Wände der Bohrung bedeckt sind, um den elektrischen, nicht aber den ionischen Kontakt zwischen den Elektroden während der Nutzung zu verhindern, wobei, wenn das gewünscht wird, am Boden der Bohrung, vorzugsweise zwischen den Streifen, eine elektrisch isolierende Sperre vorgesehen wird, wobei in jedem Streifen in der Nähe der Verbindungsstelle zwischen den radial verlaufenden und den mittleren Teilen Ausschnitte vorgesehen sind, um die Anpassung des Korbes an den Hohlraum zu erleichtern, und daß anschließend der Rest der Zelle auf herkömmliche Weise montiert wird,
wobei das genannte Verfahren wahlweise so modifiziert wird, daß die resultierende Zelle jedes einzelne oder mehrere geeignete Merkmale nach der Definition in einem der vorhergehenden Ansprüche in jeder geeigneten Kombination aufweist.

## Revendications

1. Une pile électrochimique, dans laquelle les électrodes sont agencées de sorte que l'une est logée à l'intérieur d'une cavité dans l'autre, comprenant un panier de séparateur assurant in situ une perméabilité ionique et un isolement électrique, et s'étendant dans la cavité autour de l'électrode interne pour empêcher un court-circuit électrique entre les électrodes; le panier comportant au moins une bande de séparateur, de préférence plusieurs bandes de séparateur, la partie centrale de chaque bande étant située dans la partie extrême du panier à l'intérieur de la cavité, et dans laquelle, s'il y a plusieurs bandes, les parties centrales des bandes sont superposées les unes aux autres; la partie radiale de chaque bande s'étendant le long des parois internes de la cavité pour empêcher un contact physique entre les électrodes, caractérisée en ce que des découpures sont pratiquées dans chaque bande, à proximité de la jonction entre les parties radiale et centrale, pour faciliter l'adaptation de la configuration du panier à celle de la cavité.

2. Une pile selon la revendication 1, dans laquelle le panier comporte deux bandes, de préférence avec une largeur similaire au diamètre de la cavité.

3. Une pile selon la revendication 2, dans laquelle les bandes sont pratiquement tournées de 90° l'une par rapport à l'autre.

4. Une pile selon l'une quelconque des revendications précédentes, dans laquelle les bandes sont enfoncées au fond de la cavité ou de l'alésage dans l'électrode externe et mises en contact avec celui-ci.

5. Une pile selon l'une quelconque des revendications précédentes, dans laquelle les découpures sont agencées de sorte à recouvrir du moins en partie la jonction entre les sections radiale et centrale de la bande.

6. Une pile selon l'une quelconque des revendications précédentes, dans laquelle la découpure est une simple fente au niveau de la jonction entre les parties radiale et centrale.

7. Une pile selon l'une quelconque des revendications précédentes, dans laquelle la découpure comprend une fente au niveau de la jonction entre les parties radiale et centrale, ensemble avec une partie courbée possédant un foyer en général central par rapport à la partie centrale, dans laquelle la forme courbée correspond de préférence aux proportions générales du fond de la cavité dans l'électrode externe.

8. Une pile selon l'une quelconque des revendications précédentes, comprenant en outre un moyen pour empêcher une fuite du matériau de l'électrode interne, et comprenant de préférence ou bien un couvercle approprié au fond du panier ou bien un moyen assurant que toutes les parties de chaque découpure coïncident avec au moins une autre bande du panier.

9. Une pile selon l'une quelconque des revendications précédentes, comprenant en outre, dans la partie extrême du panier, une barrière à isolement électrique, de préférence en plastique, par exemple une bande adhésive de ruban plastique, tout particulièrement en polypropylène, polyéthylène, chlorure de polyvinyle, asphalte, cire, chlorure de polyvinylidène, cellophane ou nylon, en particulier en polypropylène ou en polyéthylène.

10. Une pile selon la revendication 9, dans laquelle la barrière est disposée entre deux bandes, les bandes étant superposées.

11. Une pile selon l'une quelconque des revendications précédentes, dans laquelle l'électrode externe est la cathode et l'électrode interne est l'anode, la cathode étant de préférence composée de dioxyde de manganèse et l'anode étant de préférence composée de zinc.

12. Une pile selon l'une quelconque des revendications précédentes, dans laquelle les bandes de séparateur sont en papier tissé ou non tissé de fibres de cellulose laminées en un matelas similaire de fibres de vinyle, en papier kraft, en papier de cellulose α, en un film de méthylcellulose, en alcool de polyvinyle, en un copolymère d'acétate de polyvinyle et de chlorure de polyvinyle, en rayonne, en nylon ou en un mélange de l'une quelconque de ces substances.

13. Une pile électrochimique assemblée dans un boîtier comprenant un conteneur avec une extrémité fermée et une extrémité ouverte fermée par un couvercle; un premier matériau actif d'électrode placé à l'intérieur de la paroi interne du conteneur et contactant celle-ci, définissant une cavité à disposition centrale; un séparateur comprenant au moins deux bandes de séparateur, chaque bande possédant un segment inférieur avec des parois à extension, chaque paroi étant définie par deux bords; le segment inférieur d'une bande étant superposé au segment inférieur de l'autre bande, les parois à extension de chaque bande étant agencées de sorte à faire face aux bords des parois de l'autre bande, de sorte que les parois définissent une cavité dans ledit séparateur, et dans laquelle chaque bord d'au moins une bande comporte une entaille formée au niveau de la zone du bord adjacent au segment inférieur de la bande, pour éliminer pratiquement les plis débordant usuellement dans le bord de la bande formée dans ladite zone; ledit séparateur étant placé dans ledit premier matériau actif d'électrode et contactant celui-ci; un deuxième matériau actif d'électrode étant placé dans ladite cavité du séparateur; une première borne sur le boîtier étant connectée électriquement au dit premier matériau actif d'électrode; et une deuxième borne sur le boîtier étant isolée électriquement de la première borne et connectée électriquement au dit deuxième matériau actif d'électrode;
ladite pile comprenant en outre au choix l'une quelconque ou plusieurs caractéristiques appropriées, comme défini dans l'une quelconque des revendications précédentes, dans une quelconque combinaison apprepriée.

14. Un procédé d'assemblage d'une pile électrochimique, caractérisé en ce que, après la production d'un conteneur de pile comportant une première électrode qui y est assemblée, contenant un alésage, une bande de matériau de séparateur y étant enfoncée, de sorte qu'une partie centrale correspondante est mise en contact avec le fond de l'alésage et que les éléments radiaux bordent les côtés de l'alésage, cette étape étant suivie au choix par l'enfoncement d'une deuxième bande de séparateur dans l'alésage, comme défini pour la première bande, la deuxième bande étant tournée par rapport à la première, de préférence de 90°, surtout dans le cas où on n'utilise pas de bandes supplémentaires, et l'insertion au choix de bandes supplémentaires, au moins jusqu'à ce que les parois de l'alésage sont recouvertes pour empêcher un contact électrique, mais non pas un contact ionique entre les électrodes pendant le service, une barrière à isolement électrique étant agencée si nécessaire au fond de l'alésage, de préférence entre les bandes, des découpures étant pratiquées dans chaque bande, à proximité de la jonction entre les parties radiale et centrale, pour faciliter l'adaptation de la configuration du panier à celle de la cavité, avant l'assemblage du reste de la pile selon un procédé connu,
ledit procédé étant au choix modifié de sorte que la pile résultante présente l'une quelconque ou plusieurs caractéristiques appropriées, comme défini dans l'une quelconque des revendications précédentes, dans une quelconque combinaison appropriée.
